# EUROPÄISCHE PATENTSCHRIFT

(11) **EP 1 040 909 B1**
(45) Veröffentlichungstag und Bekanntmachung des Hinweises auf die Patenterteilung: **08.08.2001**
(21) Anmeldenummer: 99104247.4
(22) Anmeldetag: 03.03.1999
(51) Int. Cl.: B30B 15/06, B32B 5/26

(54) **Presspolster**
Press pad
Coussinet pour presse

(43) Veröffentlichungstag der Anmeldung: 04.10.2000
(73) Patentinhaber: Thomas Josef Heimbach Gesellschaft mit beschränkter Haftung & Co., D-52353 Düren (DE)
(72) Erfinder: Halterbeck, Walter, 52353 Düren (DE); Kaldenhoff, Ralf, Dr., 52072 Aachen (DE)
(74) Vertreter: Paul, Dieter-Alfred, Dipl.-Ing.

(56) Entgegenhaltungen:
- EP-A- 0 703 069
- DE-A- 2 627 442
- DE-A- 2 920 866
- DE-A- 19 521 946
- DE-U- 9 203 498
- DE-U- 29 721 494
- DE-U- 29 721 495
- US-A- 5 370 760

## Beschreibung

Die Erfindung betrifft ein Preßpolster für den Einsatz in Laminierpressen mit zwei Außenschichten und einer dazwischen angeordneten, in Dickenrichtung elastischen Polsterschicht.

Die Herstellung von Schichtmaterialien, beispielsweise dekorativ beschichteten Spanplatten, erfolgt in Laminierpressen, die als Nieder- oder Hochdrucketagenpressen oder als Kurztaktpressen ausgebildet sein können. Damit der Druck der Preßplatten vollflächig und gleichmäßig auf das Preßgut übertragen wird, werden zwischen dem Preßgut und den Preßplatten Preßpolster eingelegt. Die Preßpolster müssen höhen Drücken und auch den in solchen Pressen auftretenden Temperaturen standhalten können, und sie müssen in der Lage sein, die von den Preßplatten ausgehende Wärme schnell und ohne große Verluste auf das Preßgut überzuleiten. Außerdem ist es erwünscht, mit einem Preßpolster hintereinander Preßgut verschiedenen Formates zu verarbeiten.

Bei den Preßpolstern der eingangs genannten Art handelt es sich um Schichtkonstruktionen. So ist in der DE-A-26 27 442 ein Preßpolster beschrieben, bei dem ein Wirrfaservlies beidseitig mit einem Silikonelastomer beschichtet ist. In der gattungsbildenden EP-A-0 235 582 ist ein Preßpolster offenbart, bei dem eine Silikonelastomerfolie beidseits mit einer Trennfolie beschichtet ist. Die US-A-3 723 220 zeigt ebenfalls ein Preßpolster aus einer Silikonfolie, die zusätzlich mit einer Trennfolie belegt sein kann.

Daneben sind Preßpolster bekannt, die aus einem Gewebe bestehen oder es enthalten. So offenbart die DE-B-23 19 593 ein Preßpolster, dessen Basis ein Metallsiebgewebe ist, das in einer Matrix aus einem Silikonelastomer eingeschlossen ist. Das Preßpolster gemäß der DE-A-23 38 749 weist ein Glasfasergewebe auf, bei dem einzelne oder sämtliche Fäden mit einem Kunststoff, beispielsweise einem Silikonelastomer, imprägniert oder beschichtet sind, so daß diese Fäden die Polsterung bilden. Entsprechendes ist der DE-A-26 50 642 zu entnehmen. In der EP-A-0 493 630 wird ein Preßpolster aus einem textilen Gewebe vorgeschlagen, bei dem das Gewebe aus aromatischen Polyamidfäden und aus Metallfäden zusammengesetzt ist. Das DE-U-297 18 204 offenbart ein Preßpolster, bei dem ein Anteil der Fäden ein Silikonelastomer aufweist und ein weiterer Anteil als Metalldraht ausgebildet sein kann. Das DE-U-94 18 984.6 beschreibt ein Preßpolster, bei dem die Fäden aus verschiedenen Materialien, insbesondere aus Gummi, Silikonelastomer oder Metall sowie Kombinationen davon bestehen können. Schließlich sind in den DE-U-297 21 495 und DE-U-297 21 494 Preßpolster aus einem Gewebe dargestellt, bei dem die einzelnen Fäden in besonderer Weise ausgebildet sind.

Die geschichteten Preßpolster haben den Nachteil, daß keine ausreichende Wärmeleitfähigkeit erreichbar ist. Bei den Preßpolstern, bei denen ein Gewebe zum Einsatz kommt, müssen Kompromisse zwischen Wärmeleitfähigkeit und Dimensionsstabilität getroffen werden, so daß nicht immer ein optimales Ergebnis bezüglich dieser Eigenschaften erreichbar ist.

Der Erfindung liegt somit die Aufgabe zugrunde, ein Preßpolster so zu gestalten, daß es sich durch Dimensionsstabilität auszeichnet und daß die Wärmeleitfähigkeit in weiten Bereichen einstellbar ist, wobei auch bezüglich der Polsterung ein breiter Bereich an Variationsmöglichkeiten für eine anforderungsgerechte Auslegung des Preßpolsters gegeben sein soll.

Diese Aufgabe wird erfindungsgemäß dadurch gelöst, daß die Außenschichten von den beiden Lagen eines Abstandstextils, beispielsweise eines Abstandsgewebes, -gewirkes oder -gestrickes, mit die Lagen verbindenden Abstandsfäden gebildet sind, wobei wenigstens ein Teil der Abstandsfäden als Wärmeleitfäden ausgebildet sind, die die Wärmeleitfähigkeit des Preßpolsters in Dickenrichtung verbessern. Ein solches Abstandstextil - auch Zweiwandtextil genannt - bildet ein Verbundgewebe mit zwei Textillagen, die im wesentlichen als vollständige Gewebe, Gewirke oder Gestricke ausgebildet sind und in die zusätzlich ein Fadensystem eingebunden ist, das zwischen den beiden Textillagen alterniert, wobei die zwischen den Textillagen sich erstreckenden Abschnitte die Abstandsfäden bilden. Diese Abstandsfäden geben den maximalen Abstand zwischen den beiden Textillagen vor. Der Abstand kann dabei entsprechend den jeweiligen Anforderungen in weiten Grenzen eingestellt werden, wobei über die Abstandsfäden ein über die Fläche gleichmäßiger Abstand gewährleistet werden kann. Solche Abstandstextile sind bisher in anderen Bereichen der Technik eingesetzt worden, beispielsweise im Bereich Grundwasserschutz (vgl. Dr. G. Schwarz, Girmes GmbH, Vortrag Nr. 344 auf dem Techtextil-Symposium 1990; EP-B-0 450 154).

Ein solches Preßpolster zeichnet sich durch hohe Dimensionsstabilität aus. Durch die ebenen und sehr gleichmäßigen Oberflächen mit einer hohen Anzahl an Berührungspunkten entsteht ein guter Kontakt zu den beheizten Preßplatten. Hierdurch sowie durch die Vielzahl der Abstandsfäden ist ein guter Wärmeübergang und ein schneller Wärmetransport durch das Preßpolster erzielbar, wobei die Wärmeleitfähigkeit durch die Anzahl der Abstandsfäden und deren Material in weiten Grenzen entsprechend den jeweiligen Anforderungen angepaßt werden kann. Dabei müssen nicht alle Abstandsfäden als Wärmeleitfäden ausgebildet sein. Vielmehr können sie sich mit mechanisch und thermisch hochfesten Abstandsfäden beispielsweise aus Aramiden, Polyimiden oder einer Kombination davon abwechseln.

In Ausbildung der Erfindung ist vorgesehen, daß Wärmeleitfäden vorhanden sind, die wenigstens teilweise metallisch sind, beispielsweise aus Aluminium, Bronze, Edelstahl, Kupfer oder Messing bestehen oder ein solches Metall neben anderen Werkstoffen enthalten. Ferner kann vorgesehen sein, daß das Abstandstextil neben den Abstandsfäden weitere Wärmeleitfäden aufweist, die aus einem solchen Material bestehen oder es enthalten, daß hierdurch die Wärmeleitfähigkeit verbessert wird, so daß damit ebenfalls für einen guten Wärmeübergang an den Oberflächen des Preßpolsters gesorgt ist. Auch diese weiteren Fäden können wenigstens teilweise metallisch sein.

Für die Ausbildung der elastischen Polsterschicht können verschiedenste Ausführungsformen in Frage kommen. So kann die Polsterschicht beispielsweise wenigstens eine Lage von in Dickenrichtung elastischen Polsterfäden aufweisen, wie sie bei den Preßpolstern, die aus Geweben bestehen, bekannt sind. Dabei können die Polsterfäden vollständig aus einem gummielastischen Material bestehen, beispielsweise einem Silikonelastomer, also als Silikonmonofile oder mit Metallpulver gefüllte Silikonmonofile. Die Polsterfäden können jedoch auch jeweils einen Seelenfaden, beispielsweise ein Kunststoffmultifilament aus Aramid, Polyimid etc. oder einen Metalldraht z.B. aus Kupfer, aufweisen, der von einem gummielastischen Fadenmantel, hier vorzugsweise wieder aus einem Silikonelastomer, umgeben ist. Die Seelenfäden können als Drähte, Monofile, Multifile, Spinnfasergarne, Zwirne, Seile, Geflechte, Litzen, Kordeln, Bänder oder dergleichen sowie aus Kombinationen davon ausgebildet sein. Zur Verbesserung der Wärmeleitfähigkeit können die Polsterfäden zumindest teilweise auch von einem Metalldraht umgeben sein, der um den Fadenmantel gewickelt, verseilt oder geflochten ist. Wegen seiner hohen Wärmeleitfähigkeit kommt als Metall insbeosndere Kupfer in Frage, aber auch Aluminium, Bronze, Edelstahl und Messing können eingesetzt werden.

In dem Abstandstextil können die Polsterfäden nebeneinander in derselben Richtung verlaufend angeordnet werden, wobei sie dann als Gelege vorliegen und so die Dimensionsstabilität gewährleisten. Die Polsterschicht kann jedoch auch eine polymere Vergußmasse aufweisen, beispielsweise aus einem Silikonelastomer oder einem Fluorsilikonelastomer, wobei der Vergußmasse Metallteilchen in Form von Pulver oder Kurzschnittfasern zugegeben sein können.

Die polymere Vergußmasse wird zunächst in flüssigem Zustand zwischen die Lagen des Abstandstextils eingebracht. Nach Erreichen der gewünschten Position werden durch Vernetzung oder durch Aushärten die endgültigen elastischen mechanischen Eigenschaften herbeigeführt. In die Vergußmasse können auch Metallpulver oder Metallkurzschnittfasern eingelagert werden.

Es kommen auch Kunststoffschäume in Frage. Dabei ist es nicht ausgeschlossen, die Polsterschicht mehrlagig auszubilden und jede einzelne Lage anders zu gestalten, also Kombinationen verschiedener Ausbildungen von Lagen vorzusehen.

Schließlich ist gemäß der Erfindung vorgesehen, daß das Preßpolster Randverdickungen aufweist, um einen gleichmäßigen Anpreßdruck über die gesamte Fläche zu gewährleisten.

In der Zeichnung ist die Erfindung anhand von Ausführungsbeispielen näher veranschaulicht. Es zeigen:
- Figur 1: einen Ausschnitt eines Preßpolsters mit Abstandsgewebe in Schrägansicht;
- Figur 2: eine Draufsicht auf einen Ausschnitt der Oberseite des Abstandsgewebes gemäß Figur 1;
- Figur 3: die Seitenansicht eines Polsterfadens mit Drahtumflechtung;
- Figur 4: einen Querschnitt durch den Polsterfaden gemäß Figur 3;
- Figur 5: einen Ausschnitt eines Preßpolsters mit Abstandsgewirke in der Schrägansicht;
- Figur 6: eine Draufsicht auf einen Ausschnitt der Oberseite des Abstandsgewirkes und
- Figuren 7 bis 9: Querschnitte durch Preßpolster mit Randverdickungen.

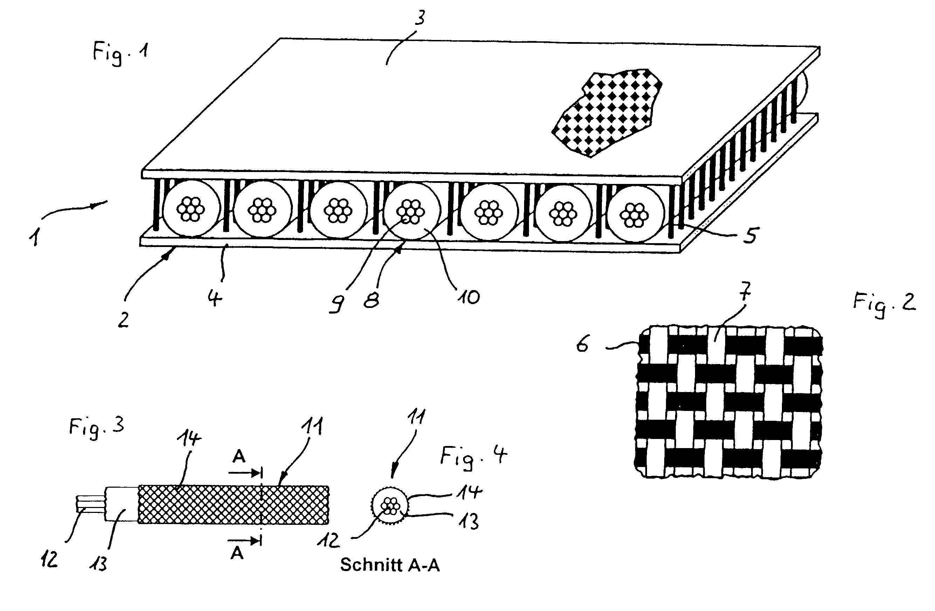

Das in Figur 1 dargestellte Preßpolster 1 weist ein Abstandsgewebe 2 auf, welches aus zwei Decklagen 3, 4 und diese verbindenden Abstandsfäden - beispielhaft mit 5 bezeichnet - besteht. Wie aus Figur 2 ersichtlich, ist die Decklage 3 aus Kettfäden 6 (schwarz ausgefüllt gezeigt) und Schußfäden 7 in Leinwandbindung gewebt, wobei die Kettfäden 6 Abstandsfäden 5 bilden und zwischen beiden Decklagen 3, 4 alternieren, so daß sich die aus Figur 1 ersichtlichen Reihen von Abstandsfäden 5 ergeben.

Zwischen die Reihen der Abstandsfäden 5 sind Polsterfäden - beispielhaft mit 8 bezeichnet - eingelegt, wobei der Abstand der Decklagen 3, 4 an die Dicke der Polsterfäden 8 angepaßt ist. Die Polsterfäden 8 weisen eine verseilte Drahtlitze - beispielhaft mit 9 bezeichnet - auf, welche jeweils von einem Fadenmantel - beispielhaft mit 10 bezeichnet - aus einem Silikonelastomer umgeben sind. Die Polsterfäden 8 sorgen für eine Gummielastizität des Preßpolsters 1 in Dickenrichtung.

In den Figuren 3 und 4 ist ein besonderer Polsterfaden 11 dargestellt. Auch er weist als Seelenfaden eine Drahtlitze 12 aus Kupfer auf, die von einem Fadenmantel 13 aus einem Silikonelastomer umgeben ist. Der Fadenmantel 13 ist zusätzlich an seiner Außenseite mit Kupferdrähtenbeispielhaft mit 14 bezeichnet - umflochten. Hierdurch wird die Wärmeleitfähigkeit gegenüber dem Polsterfaden 8 verbessert.

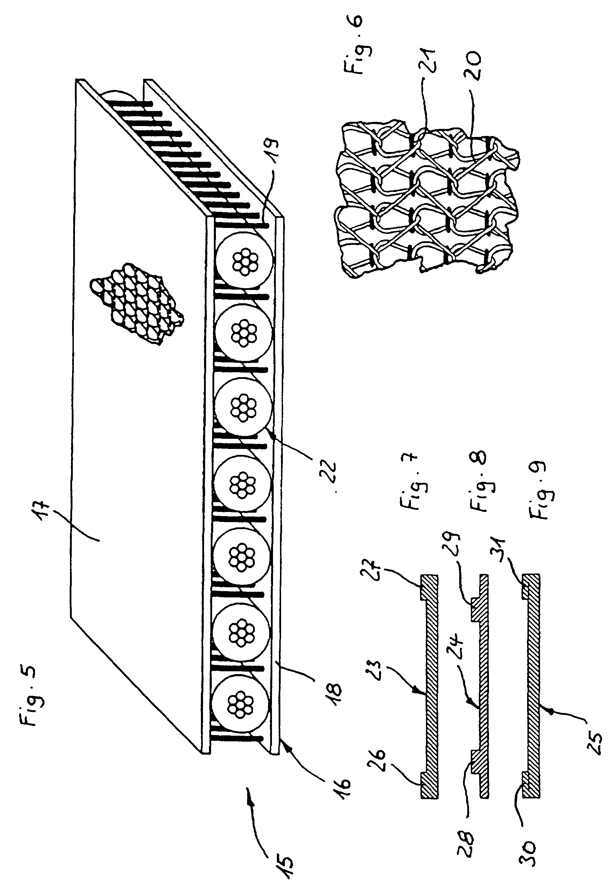

Figur 5 zeigt ein Preßpolster 15, das sich von dem Preßpolster 1 dadurch unterscheidet, daß nicht ein Abstandsgewebe vorgesehen ist, sondern ein Abstandsgewirke 16. Auch dieses Abstandsgewirke 16 hat zwei Decklagen 17, 18, welche durch in Reihen angeordnete Abstandsfäden 19 in einem definierten Abstand miteinander verbunden sind. Wie das Detail gemäß Figur 6 erkennen läßt, bilden die Decklagen 17, 18 des Abstandsgewirkes 16 jeweils ein Kettengewirke mit Maschenfäden - beispielhaft mit 20 bezeichnet -, wobei zusätzlich Polfäden - beispielhaft mit 21 bezeichnet - eingebracht sind, die zwischen den Decklagen 17, 18 alternieren und damit die Abstandsfäden 19 bilden.

Zwischen den Reihen der Abstandsfäden 19 sind auch hier wieder Polsterfäden - beispielhaft mit 22 bezeichneteingelegt, die mit den Posterfäden 8 bei dem Preßpolster 1 übereinstimmen, so daß auf die dortige Beschreibung Bezug genommen wird. Die Polsterfäden 22 sorgen für Gummielastizität in Dickenrichtung des Preßpolsters 1.

Die Figuren 7 bis 9 zeigen umrißartig Querschnitte von Preßpolstern 23, 24, 25, welche Randverdickungen 26, 27, 28, 29, 30, 31 aufweisen. Die Randverdickungen 26, 27, 28, 29, 30, 31 können durch den Einsatz zusätzlicher Polsterfäden, Erhöhung der Maschendichte, Einbringen von Bändern oder durch Schlaufenbildung erzeugt werden. Bei dem Ausführungsbeispiel gemäß Figur 9 werden die Randverdickungen 30, 31 durch Umschlagen an den Rändern gebildet.

Die Randverdickungen 26, 27, 28, 29, 30, 31 sorgen für einen gleichmäßigen Anpreßdruck über die gesamte Fläche bis in die Rundbereiche.

## Patentansprüche

1. Preßpolster (1, 15) für den Einsatz in Laminierpressen mit zwei Außenschichten (3, 4, 17, 18) und einer dazwischen angeordneten, in Dickenrichtung elastischen Polsterschicht (8, 22), **dadurch gekennzeichnet,** daß die Außenschichten von den beiden Lagen (3, 4, 17, 18) eines Abstandstextils (2, 16) mit die Lagen (3, 4, 17, 18) verbindenden Abstandsfäden (5, 19) gebildet sind, wobei wenigstens ein Teil der Abstandsfäden (5, 19) als Wärmeleitfäden ausgebildet ist.

2. Preßpolster nach Anspruch 1, **dadurch gekennzeichnet**, daß das Abstandstextil als Abstandsgewebe (2), -gewirke (16) oder -gestricke ausgebildet ist.

3. Preßpolster nach Anspruch 1 oder 2, **dadurch gekennzeichnet,** daß Wärmeleitfäden (5, 19) vorhanden sind, die wenigstens teilweise metallisch sind.

4. Preßpolster nach einem der Ansprüche 1 bis 3, **dadurch gekennzeichnet,** daß das Abstandstextil (2, 16) in wenigstens einer der beiden Lagen (3, 4, 17, 18) neben den Abstandsfäden (5, 19) weitere Wärmeleitfäden aufweist.

5. Preßpolster nach Anspruch 4, **dadurch gekennzeichnet,** daß diese weiteren Wärmeleitfäden wenigstens teilweise metallisch sind.

6. Preßpolster nach einem der Ansprüche 1 bis 5, **dadurch gekennzeichnet,** daß die Polsterschicht wenigstens eine Lage von in Dickenrichtung elastischen Polsterfäden (8, 11, 22) aufweist.

7. Preßpolster nach Anspruch 6, dadurch gekennzeichnet, daß die Polsterfäden (8, 11, 22) jeweils einen Seelenfaden (12) aufweisen, der von einem gummielastischen Fadenmantel (13) umgeben ist.

8. Preßpolster nach Anspruch 7, **dadurch gekennzeichnet,** daß der Fadenmantel (13) aus einem Silikonelastomer besteht.

9. Preßpolster nach Anspruch 7 oder 8, **dadurch gekennzeichnet,** daß die Polsterfäden (11) zumindest teilweise von Metalldraht umgeben sind.

10. Preßpolster nach einem der Ansprüche 7 bis 9, **dadurch gekennzeichnet,** daß die Polsterfäden (8, 22) nebeneinander in derselben Richtung verlaufen.

11. Preßpolster nach einem der Ansprüche 7 bis 9, **dadurch gekennzeichnet,** daß die Polsterfäden (8, 22) als Gelege vorliegen.

12. Preßpolster nach einem der Ansprüche 1 bis 11, **dadurch gekennzeichnet,** daß die Polsterschicht eine polymere Vergußmasse aufweist, beispielsweise aus einem Silikonelastomer oder einem Fluorsilikon.

13. Preßpolster nach einem der Ansprüche 1 bis 12, **dadurch gekennzeichnet,** daß die Polsterschicht aus einem Kunststoffschaum besteht.

14. Preßpolster nach einem der Ansprüche 1 bis 13, **dadurch gekennzeichnet,** daß das Preßpolster (23, 24, 25) Randverdickungen (26, 27, 28, 29, 30, 31) aufweist.

## Claims

1. Pressure pad (1, 15) for use in laminating presses, having two outer layers (3, 4, 17, 18) and disposed therebetween a widthways elastic cushioning layer (8, 22), characterised in that the outer layers of the two plies (3, 4, 17, 18) of a spacing textile (2, 16) are constituted with spacing filaments (5, 19) which connect the plies (3, 4, 17, 18), at least some of the spacing filaments (5, 19) being in the form of heat conducting filaments.

2. Pressure pad according to claim 1, characterised in that the spacing textile is in the form of a woven (2), non-woven (16) or knitted spacer fabric.

3. Pressure pad according to claim 1 or 2, characterised by the presence of heat conducting filaments (5, 19) which are at least in part metallic.

4. Pressure pad according to any of claims 1 to 3, characterised in that in at least one of the two plies (3, 4, 17, 18) the spacing textile (2, 16) incorporates additional heat conducting filaments in addition to the spacer filaments (5, 19).

5. Pressure pad according to claim 4, characterised in that these additional heat conducting filaments are at least in part metallic.

6. Pressure pad according to any of claims 1 to 5, characterised in that the cushioning layer incorporates at least one ply comprising widthways elastic cushioning filaments (8, 11, 22).

7. Pressure pad according to claim 6, characterised in that the cushioning filaments (8, 11, 22) respectively incorporate a core thread (12) which is enclosed in an elasticated filament covering (13).

8. Pressure pad according to claim 7, characterised in that the filament covering (13) consists of a silicone elastomer.

9. Pressure pad according to claim 7 or 8, characterised in that the cushioning filaments (11) are enclosed at least in part in metal wire.

10. Pressure pad according to any of claims 7 to 9, characterised in that the cushioning filaments (8, 22) run alongside one another in the same direction.

11. Pressure pad according to any of claims 7 to 9, characterised in that the cushioning filaments (8, 22) are in the form of a deposit.

12. Pressure pad according to any of claims 1 to 11, characterised in that the cushioning layer incorporates a polymer encapsulating compound, for instance made of a silicone elastomer or a fluorosilicone.

13. Pressure pad according to any of claims 1 to 12, characterised in that the cushioning layer consists of a foamed plastic.

14. Pressure pad according to any of claims 1 to 13, characterised in that the pressure pad (23, 24, 25) incorporates peripheral thickened areas (26, 27, 28, 29, 30, 31).

## Revendications

1. Coussinet pour presse (1, 15) destiné à être mise en oeuvre dans des presses à stratifier, comprenant deux couches extérieures (3, 4, 17, 18) et une couche de rembourrage (8, 22) intercalée entre les deux, qui est élastique dans la direction de l'épaisseur, caractérisé en ce que les couches extérieures sont formées par les deux couches (3, 4, 17, 18) d'un textile d'espacement (2, 16) comportant des fils d'espacement (5, 19) reliant les couches (3, 14, 17, 18) entre elles, sachant qu'au moins une partie des fils d'espacement (5, 19) est réalisée en tant que fils conducteurs de chaleur.

2. Coussinet pour presse selon la revendication 1, caractérisé en ce que la matière textile d'espacement est réalisée en tant que tissu d'espacement (2) ou tissu d'espacement à mailles (16).

3. Coussinet pour presse selon la revendication 1 ou 2, caractérisé en ce que des fils conducteurs de chaleur (5, 19) sont prévus, qui sont au moins partiellement métalliques.

4. Coussinet pour presse selon l'une des revendications 1 à 3, caractérisé en ce que la matière textile d'espacement (2, 16) présente, au moins dans l'une des deux couches (3, 4, 17, 18), à côté des fils d'espacement (5, 19), des fils conducteurs de chaleur supplémentaires.

5. Coussinet pour presse selon la revendication 4, caractérisé en ce que ces fils conducteurs de chaleur supplémentaires sont au moins partiellement métalliques.

6. Coussinet pour presse selon l'une des revendications 1 à 5, caractérisé en ce que la couche de rembourrage présente au moins une couche de fils de rembourrage élastiques dans la direction de l'épaisseur (8, 11, 22).

7. Coussinet pour presse selon la revendication 6, caractérisé en ce que les fils de rembourrage (8, 11, 22) présentent chacun une âme (12) qui est entourée d'une gaine élastique (13).

8. Coussinet pour presse selon la revendication 7, caractérisé en ce que la gaine (13) est composée d'un élastomère silicone.

9. Coussinet pour presse selon la revendication 7 ou 8, caractérisé en ce que les fils de rembourrage (11) sont au moins partiellement entourés de fil métallique.

10. Coussinet pour presse selon l'une des revendications 7 à 9, caractérisé en ce que les fils de rembourrage (8, 22) s'étendent côte à côte dans la même direction.

11. Coussinet pour presse selon l'une des revendications 7 à 9, caractérisé en ce que les fils de rembourrage (8, 22) sont simplement posés.

12. Coussinet pour presse selon l'une des revendications 1 à 11, caractérisé en ce que la couche de rembourrage présente une masse de scellement polymère, par exemple en un élastomère silicone ou un fluorsilicone.

13. Coussinet pour presse selon l'une des revendications 1 à 12, caractérisé en ce que la couche de rembourrage est composée d'une mousse.

14. Coussinet pour presse selon l'une des revendications 1 à 13, caractérisé en ce que le coussinet pour presse (23, 24, 25) présente des bords épaissis (26, 27, 28, 29, 30, 31).
